# EUROPEAN PATENT APPLICATION

(11) **EP 4 478 092 A1**
(43) Date of publication of application: **18.12.2024**
(21) Application number: 24181406.0
(22) Date of filing: 11.06.2024
(51) Int. Cl.: G01T 1/202, C09K 11/00, G01T 1/29, G01T 1/24

(54) **DEVICE FOR DETECTION AND TRACKING OF CHARGED PARTICLES BASED ON PEROVSKITES AND SYSTEM COMPRISING SAID DEVICE FOR MONITORING PARTICLE BEAMS**

(30) Priority: 16.06.2023 IT 202300012477
(71) Applicant: Istituto Nazionale di Fisica Nucleare, 00044 Frascati (RM) (IT)
(72) Inventor: TESTA, Marianna, I-00044 Frascati (RM) (IT); DE SANTIS, Antonio, I-00044 Frascati (RM) (IT); Giulietto, Felici, I-00044 Frascati (RM) (IT); PAPALINO, Giuseppe, I-00044 Frascati (RM) (IT); ROVELLI, Chiara, I-00044 Frascati (RM) (IT); RIZZATO, Silvia, I-00044 Frascati (RM) (IT); LO PRESTI, Leonardo, I-00044 Frascati (RM) (IT)
(74) Representative: Metroconsult Srl

(57) **Abstract**

The present invention relates to a charged-particle tracking device (1) comprising a particle sensor (10), which comprises one or more perovskite crystals, and a charge preamplifier (203). The charge preamplifier (203) is adapted to receive an electrical signal generated by the particle sensor (10) and to generate a corresponding amplified output signal. In addition, the particle sensor (10) is electrically connected to a bias terminal (Tb) via a first electrical contact (102, 103) and to an input terminal (IN) of the charge preamplifier (203) via a second electrical contact (103, 102).

Furthermore, the invention proposes the use of such device in an apparatus for monitoring the intensity of beams of charged particles for medical radiotherapy applications, in particular of the FLASH type, as well as a medical apparatus capable of generating beams of charged particles, which comprises the device according to the present invention.

## Description

### TECHNICAL FIELD

The present invention relates to the field of charged-particle detectors. In particular, the present invention concerns a device adapted for detecting and tracking one or a plurality of charged particles. Moreover, the present invention concerns a system for controlling beams of charged particles for medical applications, e.g., for controlling a FLASH therapy apparatus.

### BACKGROUND ART

In many medical, scientific and industrial environments, particle sensors are needed which can provide information about subatomic particles, hereafter referred to simply as "particles" for brevity's sake, in particular associated with ionizing radiation (e.g., electrons, protons and ions with atomic number greater than 1).

For example, particle detectors, dosimeters and trackers are widely used in medical radiotherapies in order to control the administration of ionizing radiation and keep patients and medical staff safe. In particular, the medical radiotherapy called "FLASH" requires the use of dosimeters and trackers for monitoring the intense beams of high-energy particles used during the therapy. Solid-state (silicon) detectors are commonly employed for detecting the passage, position and trajectory of charged particles flowing through them.

Research in this field has led to the development of detectors made of alternative materials. In particular, perovskite-based detectors have been developed, which offer substantial resistance to ionizing radiation. For example, Huang H. et al.: "Radiation-Tolerant Proton Detector Based on the MAPbBr3 Single Crystal", 2023, ACS Applied Electronic Materials, pp. 381-387, presents a proton detector based on a methylammonium lead tribromide perovskite crystal capable of detecting flows of protons with 3MeV energy, which are absorbed by the crystal. However, no perovskite-based detection and tracking system is currently available which can detect flows of single particles or of a plurality of particles with null or minimal absorption of the same, nor any detectors exist which can operate in a robust and reliable manner when hit by beams of high-energy particles, e.g., particle beams characterized by deposited dose rates that are of interest for FLASH therapy.

### OBJECTS AND SUMMARY OF THE INVENTION

The present invention aims at overcoming the drawbacks of the prior art.

In particular, it is one object of the present invention to provide a detector comprising at least one halide-containing perovskite sensor which can detect and track the passage of single particles or packets containing multiple charged particles.

It is a further object of the present invention to propose a system comprising said device, which is robust and reliable even when subjected to flows of particles capable of depositing radiation energy at dose rates exceeding 30 Gy/s.

These and other objects of the present invention are achieved through a system incorporating the features set out in the appended claims, which are an integral part of the present description.

According to a first aspect, the present invention relates to a particle detection and tracking device comprising a sensing element, i.e., a particle sensor, which comprises a halide-containing perovskite crystal, and a charge preamplifier. The charge preamplifier is adapted to receive an electrical signal generated by the particle sensor and to generate a corresponding output signal whose voltage amplitude is proportional to the charge released by the sensor. In addition, the particle sensor is electrically connected to a bias terminal via a first electrical contact and to an input terminal of the charge preamplifier via a second electrical contact.

In operation, a bias voltage is applied so that the particle sensor is subject to a potential difference between the first electrical contact and the second electrical contact which, depending on the thickness of the crystal, is substantially comprised between 20 V and 130 V, being preferably approx. 100 V.

The tracking device according to the present invention makes it possible to monitor the trend of a particle beam substantially in real time. Thanks to the information contained in the electrical signal produced by the device, one can accurately monitor the trend of the intensity of the particle beam, and hence the amount of radiation deposited by a particle beam hitting the device. In particular, the device can detect and track high-energy particles - the term "energy" being meant to include an energy value measured in Joules [eV] or a released energy value measured in energy per length unit [eV/m] - in a reliable and robust manner without undergoing radiation-induced damage that might impair its operation and without significantly attenuating the intensity of the monitored particle beam. More specifically, halide-containing perovskite has high resistance to radiation and self-healing properties after exposure to radiation. Such radiation resistance properties prove particularly advantageous for reliably monitoring the operation of accelerometers used for scientific, industrial or medical applications.

Moreover, the halide-containing perovskite crystal can be formed by means of a solution growth process. Therefore, the crystal can be produced in a simple and economical way, in sizes that can be adapted to different specific needs - e.g., depending on the characteristics of the particle beam to be detected/tracked. In particular, crystals can be produced to cover large areas, even on flexible substrates.

It should be noted that, whatever the material involved, there always exists a very small amount of energy that is released in ionization form by the charged particles flowing through the material as their impulse varies, as described by Bethe-Bloch formula. The particle's impulse that releases such minimal energy is on the order of mega-electronvolts for electrons, hundreds of mega-electronvolts for muons, and giga-electronvolts for protons. Energy release grows slowly from the minimum energy value for particles having a higher impulse, while it grows quickly for particles having a lower impulse.

The Applicants created a device according to the present invention, which was tested with a 400MeV electron beam and cosmic muons (average energy ~3 GeV). In both cases, the device was able to detect particle beams releasing energy comparable with the minimum energy value.

In one embodiment, the crystal of the sensor is defined by the following chemical formula:

ABX₃

where A is a monovalent cation selected from the group including: cesium (Cs⁺), formamidinium (HC(=NH₂)NH₂⁺), and methylammonium (CH₃NH₃⁺), preferably methylammonium; B is a divalent metal cation selected from the group including: lead ion Pb²⁺ and tin ion Sn²⁺, preferably lead ion Pb²⁺, and X is a halide selected from the group including: chloride ion Cl-, bromide ion Br-, or iodide ion I-, preferably bromide ion Br-.

The perovskite crystal thus made offers high resistance to ionizing radiation - e.g., higher than the resistance of sensors made of silicon (Si) - and has self-healing capabilities when exposed to ionizing radiation. In addition, the direct bandgap of the three crystal types increases according to the following sequence: iodine I, bromine Br, chlorine Cl, and takes the following values: approx. 1.55 eV, approx. 2.24 eV, and approx. 2.27 eV, respectively. Due to their greater bandgap, CH₃NH₃PbCl₃ crystals exhibit less dark current and noise than crystals comprising I or Br.

In one embodiment, the crystal of the sensor has a parallelepiped shape having a pair of square main faces with sides comprised between 3 mm and 7 mm, preferably equal to about 5.4 mm.

In addition or as an alternative, the crystal of the sensor comprises an edge, transverse to the main faces, having a length between 0.3 mm and 2.5 mm, preferably equal to approximately 1.8 mm.

With dimensions of the crystal of the sensor comprised within such intervals, the device according to the present invention can be adapted to a broad range of applications as a function of the profile of the particle beam used in each specific application.

In one embodiment, the electrical contacts of the sensor are made of indium-tin oxide (ITO) or gold (Au).

Electrical contacts made of such materials turn out to be optimal for use with the perovskite crystal. In particular, ITO and Au are both substantially transparent to particle beams, and their work function substantially corresponds to the work function of the perovskite that constitutes the crystal of the sensor. Moreover, the Applicant also observed that the use of ITO and Au prevents formation of salts at the interface between the electrical contact and the crystal, which would impair the sensitivity and reliability of the sensing element, as is the case when using contacts made of silver (Ag).

Preferably, a first electrical contact is made of indium-tin oxide (ITO), while a second electrical contact is made of gold (Au).

The use of two electrical contacts made of different materials results in reduced total electronic noise, leading to better performance in terms of sensitivity of the system.

In one embodiment, the circuit comprises an input branch. The input branch comprises a first resistor connected to a bias terminal and to the sensor. In operation, the sensor is biased to a bias voltage by means of a voltage applied to the bias terminal. The input branch also includes a protection circuit comprising a second resistor, a third resistor, and two diodes. The diodes are coupled back-to-back to a reference terminal (e.g., circuit ground) of the circuit and to a terminal which is common to the second and third resistors. The second resistor is coupled to a first capacitor, the latter being coupled to a terminal shared by the sensor and the first resistor. Lastly, a second capacitor is coupled to the third resistor and to an input terminal of the charge preamplifier.

The above-described circuit arrangement makes it possible to bias the particle sensor to voltage values up to hundreds of Volts, while at the same time using charge preamplifiers designed to operate at substantially lower voltage values (e.g., on the order of tens of Volts) without risking to damage such charge preamplifiers or to shorten their service life due to excessive voltage values and/or high-intensity current peaks applied to the terminals of such preamplifiers.

Another aspect of the present invention relates to a particle emitter apparatus - e.g., a FLASH radiotherapy apparatus - comprising a particle source, a control system, and the particle tracking device according to any one of the preceding embodiments. In operation, the device is crossed by the flow of particles emitted by the source, and supplies the control system with an electrical signal indicative of the intensity of such flow. The control system regulates the flow emitted by the source based on the electrical signal provided by the device, which, therefore, acts as a beam-intensity feedback system.

In one embodiment, the sensor of the device is positioned between the source and a target of the beam, so as to be crossed by it.

The apparatus according to the present invention provides better control over the energy transferred, as well as the radiation dose administered, to the target thanks to the accurate tracking of the intensity of the particle beam ensured by the device.

Another aspect of the present invention relates to an apparatus for detecting radiation, e.g., particles of cosmic origin. The apparatus comprises at least one tracking device according to any one of the above-described embodiments, and a processing device coupled to each tracking device comprised in the apparatus for receiving the respective output signal.

The apparatus for detecting radiation provides radiation detection which is particularly sensitive and robust to noise and non-ideality. In particular, the halide-containing perovskite crystal makes this apparatus very versatile, since this type of crystal offers high resistance to radiation and self-healing properties after exposure to radiation. Furthermore, the halide-containing perovskite crystal can be easily and reliably made in a wide range of sizes.

Further features and objects of the present invention will become more apparent in light of the description that follows.

### BRIEF DESCRIPTION OF THE DRAWINGS

The invention will now be described with reference to some non-limiting explanatory examples illustrated in the accompanying drawings. Such drawings illustrate different aspects and embodiments of the present invention and, wherever appropriate, any similar structures, components, materials and/or elements in the various drawings are designated by similar reference numbers.
Figure 1 is a block diagram of a radiotherapy system comprising a detector or tracker device according to one embodiment of the present invention;
Figure 2 is a schematic exploded view of a particle sensor used in the device according to one embodiment of the present invention, and

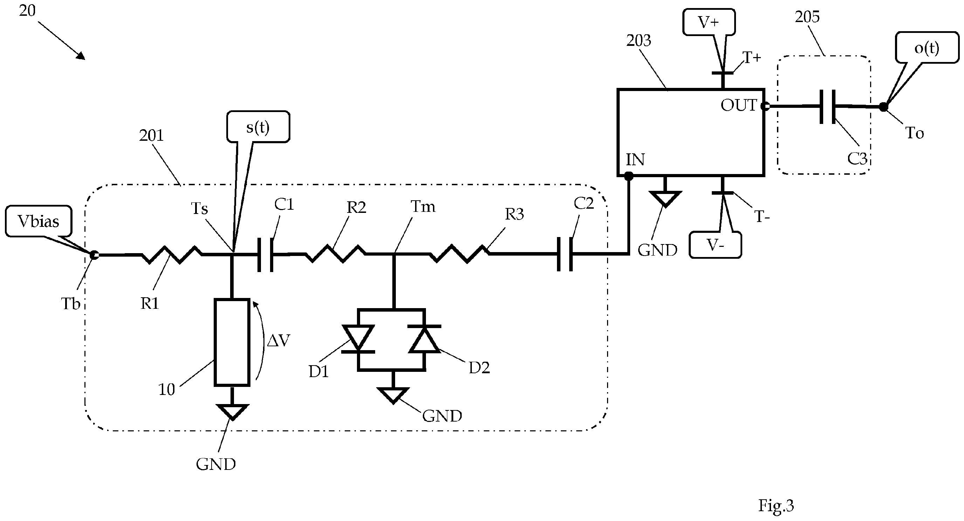

Figure 3 is a circuit diagram of the device according to one embodiment of the present invention.

### DETAILED DESCRIPTION OF THE INVENTION

The following will disclose in detail some preferred embodiments of the invention, although the latter is susceptible of many alternative variations. It should be understood, however, that there is no intention to limit the invention to the specific embodiments illustrated herein; on the contrary, the invention is meant to cover any modifications and/or the use of any equivalent elements or steps that may fall within the scope of the invention as set out in the claims. Unless otherwise specified, all technical terms, notations and other scientific terms used herein are intended to have the meaning commonly understood by those skilled in the art to which this invention pertains. In some cases, terms whose meaning is commonly understood will be further defined for the sake of clarity and/or for ready reference, but the insertion of such definitions in the present description should not be interpreted as representative of any substantial difference from what is generally understood in the art.

The terms "comprising", "having", "including" and "containing" should be understood as open terms (i.e., as "comprising, but not limited to") and should be considered as a support also for expressions like "to essentially consist of", "essentially consisting of", "to consist of" or "consisting of".

Unless otherwise specified, "for example", "etc.", "or" indicate non-exclusive and non-limiting alternatives. Unless otherwise specified, "includes" means "includes, without being limited to".

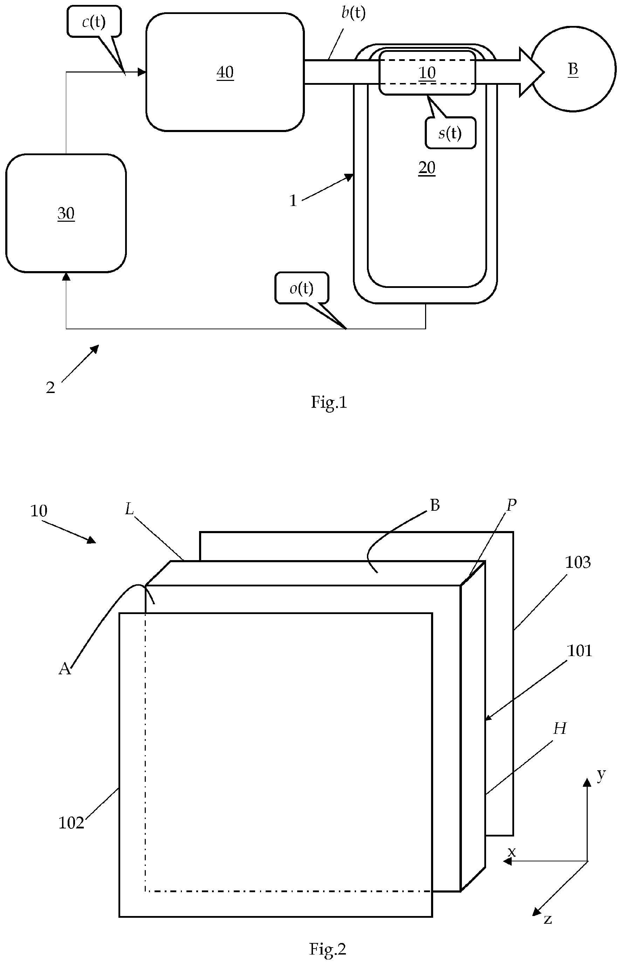

With reference to Figure 1, a particle detection and/or tracking device, hereafter designated as "device 1" for the sake of brevity, comprises a sensing element 10 belonging to an electronic circuit 20. In the example considered herein, the device 1 is included in a FLASH radiotherapy apparatus 2 comprising also a control system 30 and a particle source 40, typically a particle accelerator. In particular, the device 1 is so arranged that at least the sensing element 10 is located between the particle source 40 and a target B - e.g., a tumor mass, in the case of a radiotherapy apparatus - to be irradiated with a particle beam b(t).

In operation, the device 1 is hit by the particle beam b(t) emitted by the particle source 40. In particular, the sensing element 10 is crossed by the particle beam *b*(t). The sensing element 10 generates a time-dependent electric signal s(t) representative of the trend over time of the intensity of the particle beam b(t) flowing through it. In particular, the indication of the intensity of the particle beam is a function that depends on the number of particles detected by the device within a predetermined time interval. The electronic circuit 20 is adapted to amplify and, preferably, filter the electric signal *s*(t), so as to supply to the control system 30 a corresponding output signal *o*(t). The control system 30 is adapted to process the received output signal *o*(t) by means of a control algorithm and one or more operating parameters - e.g., stored in a memory area of the control system 30 and/or defined by a user - for the purpose of outputting a control signal *c*(t), which is transmitted to the particle source 40. In more detail, the control signal *c*(t) regulates the intensity and duration of the emitted particle beam *b*(t) in order to obtain the desired radiation dose rate to be deposited on the target B.

The sensing element 10 of the device 1 according to the embodiments of the present invention - of which Figure 2 shows a qualitative exploded view - comprises a perovskite crystal 101. The crystal 101 is defined by the following chemical formula:

ABX₃ (1)

Where:
- A is a cation selected from a group including: cesium (Cs⁺), formamidinium (HC(=NH₂)NH₂⁺) and methylammonium (CH₃NH₃⁺), preferably methylammonium;
- B is a metal cation selected from a group including: lead ion Pb²⁺ or tin ion Sn²⁺, preferably lead ion Pb²⁺, and
- X is a halide selected from a group including: chloride ion Cl-, bromide ion Br, or iodide ion I-, preferably bromide ion Br.

In particular, the Applicants determined that, in crystals with CH₃NH₃PbX formula, the direct bandgap increases according to the selected halide in the following sequence: iodine I, bromine Br, chlorine Cl. The bandgaps take the following values: approx. 1.55 eV, approx. 2.24 eV and approx. 2.27 eV for I, Br and Cl, respectively. Due to their greater bandgap, CH₃NH₃PbCl₃ crystals exhibit less dark current and noise than crystals comprising iodide ion I- or bromide ion Br-.

In the embodiment considered herein, the crystal 101 is shaped as a prism having a width *l* and a height *h* of approx. 5.4 mm and a depth *p* of approx. 1.8 mm. More generally, the width *l* and the height *h* of the crystal 101 are comprised between 3 mm and 7 mm (i.e., 3 mm ≤ *l* ≤ 7 mm, and 3 mm ≤ *h* ≤ 7 mm), while the depth *p* of the crystal 101 is comprised between 0.3 mm and 2.5 mm (i.e., 0.3 mm ≤ p ≤ 2.5 mm). In the present description, the "width" of the crystal 101 refers to the length of the edges L parallel to the x-axis of the three-dimensional reference system x,y,z shown in Figure 2, the "height" refers to the length of the edges H parallel to the y-axis of the three-dimensional reference system x,y,z, and the "depth" refers to the length of the edges P parallel to the z-axis of the three-dimensional reference system x,y,z. In general, the edges L and H whose length is equal to the width *l* and to the height *h* delimit the main faces A of the crystal 101, while the minor faces B of the crystal 101 are delimited by a pair of edges P having a length equal to the depth *p* and a pair of edges L or H having a length equal to the width *l* or the height *h.* In operation, the main faces A are arranged transversal, preferably perpendicular, to the direction of propagation of the particle beam *b*(t) to be tracked, whereas the minor faces are substantially parallel to the direction of propagation of the particle beam *b*(t). In other words, the crystal 101 is arranged in the device 1 in such a way as to be crossed by the particle beam *b*(t) in the depth direction (i.e., through the thickness of the crystal 101).

The sensing element 10 further comprises a pair of electrical contacts 102 and 103, which are coupled to opposite faces of the crystal 101. Preferably the contacts 102 and 103 are deposited on the faces A delimited by the edges L and H having a length equal to the width *l* and the height *h*, respectively (as shown in Figure 2). The electrical contacts 102 and 103 are made of a material having a work function substantially corresponding to the work function of the perovskite that constitutes the crystal 101. In particular, the values of the contacts' work functions are selected within a range of approximately 200 meV from the value of at least one of the conduction band and the valence band of the perovskite crystal 101. In a preferred embodiment, the electrical contacts 102 and 103 are made of either indium-tin oxide, referred to in the art as ITO, or gold Au. Preferably, a first electrical contact 102 or 103 of the pair of electrical contacts is made of gold, and a second electrical contact 103 or 102 is made of ITO. The electrical contacts 102 and 103 are, substantially, conductive layers evaporated by means of masks on the surfaces of the crystal 101, so that the area of the contacts 102 and 103 is smaller than or equal to that of the face of the crystal 101. The conductive layers have a depth, i.e., a thickness, which is substantially smaller than the depth of the crystal 101. Preferably, the thickness of the deposited gold layer is approx. 80 nm, and the thickness of the layer of tin oxide (ITO) is comprised between approx. 180 nm and 200 nm.

Intermediate layers, or contact layers, may optionally be inserted between the crystal 101 and the contacts 102 and 103 in order to improve the performance of the sensor, in particular its dark current. This is known in the art and will not, for brevity's sake, be described in detail herein.

The electronic circuit 20 of the device 1 comprises a detection branch 201, connected to an input terminal IN of a charge preamplifier 203, and an output branch 205, connected to an output terminal OUT of the charge preamplifier 203. The detection branch 201 comprises three resistors R1, R2 and R3, the sensing element 10, a first capacitor C1, a pair of diodes D1 and D2, and a second capacitor C2. In more detail, a first resistor R1, the first capacitor C1, a second resistor R2, a third resistor R3 and the second capacitor C2, in this order, constitute the input branch between the terminal Tb, adapted to receive a bias voltage Vbias, and the input terminal IN of the charge preamplifier 203. The sensing element 10 has two terminals, one connected to ground and the other connected to a sensor terminal Ts between R1 and C1. On the other hand, the diodes D1 and D2 are arranged in antiparallel between a reference terminal GND - e.g., a ground terminal of the electronic circuit 20 - and an intermediate terminal Tm, to which also the second resistor R2 and the third resistor R3 are connected. In particular, the resistor R1 is used to bias the sensing element 101. The resistors R2-R3 and the diodes D1 and D2 form a protection circuit of the charge preamplifier 203 preventing any discharges in the sensing element 10. The first capacitor C1 decouples the sensing element 10 from the rest of the circuit. The second capacitor C2 decouples the charge preamplifier 203 from the input branch 201. For example, the resistor R1 has a value of approx. 100 kQ, the resistors R2 and R3 have each a value of approx. 10Ω, and the diodes are, preferably, quick-switching diodes (e.g., switching time ≤ 4 ns); for example, the diodes D1 and D2 are BAV99-series diodes manufactured by Nexperia. The first capacitor C1 has a value substantially greater than the parasitic capacitance of the sensing element 10 (in the example considered herein, a capacitance of approx. 47 nF), while the capacitor C2 has a value suitable for properly filtering the signal inputted to the preamplifier 203 (in the example considered herein, a capacitance of approx. 47 nF).

The charge preamplifier 203 comprises the above-mentioned input terminal IN and output terminal OUT, a ground terminal Tg connected to the reference terminal GND of the electronic circuit 20, a first power terminal T+, adapted to receive a first supply voltage value V+, and a second power terminal T-, adapted to receive a second supply voltage value V-. Preferably, the second supply voltage value V- equals the first supply voltage value V+, but with opposite sign (i.e., V- = - V+).

In the example considered herein, the charge preamplifier is a CR-110R2 device manufactured by Cremat Inc.

Lastly, the output branch 205 comprises a third capacitor C3 connected to the output terminal OUT of the charge preamplifier 203 and to an output terminal To of the electronic circuit 20, which supplies the output signal *o*(t) to electronics downstream of the electronic circuit 20 (in the example shown in Figure 1, to the control system 30).

The third capacitor C3 has a capacitance value of approx. 47 nF, and its function is to electrically decouple the output branch 205 from the output terminal OUT of the charge preamplifier 203.

In operation, the sensing element 10 is adapted to operate with a bias voltage Vbias, applied to the bias terminal Tb, on the order of a hundred of Volts, preferably ranging between approx. 20V and approx. 130 V (20 V ≤ Vbias ≤ 130 V), preferably 100 V. Due to the configuration of the electronic circuit 20, the potential difference ΔV applied across the contacts 102 and 103 of the sensor 10 substantially corresponds to the bias voltage. The sensing element 101 thus biased has an internal electric field that allows collecting, at the contacts 102 and 103, the electron-hole pairs generated by the passage of the particle beam b(t). The resulting charge variation is then converted into voltage variation at the output of the preamplifier 203, amplified by a specific gain factor of the preamplifier.

In other words, at least part of the particle beam b(t) that crosses the sensing element 10 interacts with the latter, thereby generating a variation in the electric charge accumulated in the sensing element over time; the electrical signal s(t) of the sensing element 10 varies as a function of this charge variation. This time-based charge variation is converted into voltage variation at the output of the preamplifier 203, i.e. into the output signal o(t).

Tests carried out by the Applicants have shown that the device 1 can detect electrons with impulse of approx. 400 MeV. A test device made in accordance with the present invention was tested at the Beam Test Facility (BTF) of the National Laboratories of Frascati. During the test, the device 1 was subjected to a known electron beam, and the output signal of the device was then evaluated. Electron beam multiplicity was varied from one (single electron) to 1,000 with an associated energy of approx. 400 MeV, a spot average area of 3x3 mm², a repetition frequency of 25 Hz, and an impulse duration of 10 ns. The device showed a response (in the output signal) proportional to the number of particles in that dynamic range of the particle beam. During the test, the multiplicity of the particle beam was measured by means of a calibrated calorimeter placed downstream of the device, and then used for evaluating the output signal of the device.

The device was also tested with single muons coming from cosmic rays. Surprisingly, the Applicants observed that, the minimum energy release having been detected, all particles with higher energy were detected by the device, without setting a maximum limit for the impulse of the particles detectable by the detector. On the other hand, the minimum detectable impulse depends on other factors such as the phenomenon called "multiple scattering".

Should a specific implementation require it, the dimensions of the crystal 101 can be optimized to minimize multiple scattering. By optimizing thickness and area it is possible, in fact, to detect particles with impulse of 4 MeV for electrons and approx. 60 MeV for protons. It must be pointed out that such values correspond to the values of the nominal minimum impulses for those accelerators which are the current candidates for use in FLASH therapy. Generally, the sensitivity of the low-energy particle-beam device 1 can be improved by reducing its thickness and, preferably, by increasing the area of the crystal 101 as necessary.

It is however clear that the above-described examples should not be deemed as limiting, and that the invention thus conceived is susceptible of numerous modifications and variations.

For example, although a crystal with major sides of 3 mm to 7 mm has been proposed herein, in other embodiments (not shown) the crystal may be subjected to two or more growth cycles to obtain a crystal with major sides on the order of centimeters.

Furthermore, the limit thickness of the crystal is dictated by the deposited amount of energy, which must guarantee an adequate signal-to-noise ratio in any specific case. For example, in the case of the device 1 used for detecting a single electron with energy of approx. 400 MeV, the crystal shall have a thickness of approx. 1.8 mm. In general, thickness can be optimized to values between 0.3 mm and 2.5 mm as a function of the multiplicity of particles to be detected and of the particles' energy. For detection of a plurality of particles - e.g., for application in medical apparatuses - the thickness of the crystal should be selected according to a criterion envisaging that the thickness must be inverse to the intensity of the flow of particles b(t) - i.e., the thickness decreases as the intensity the flow of particles b(t) increases. For impulses lower than those associated with the release of minimum ionization, the thickness must be reduced because energy release per length unit is greater than the minimum energy, and the particle beam can still be reliably detected by means of a crystal having a smaller volume. In this case, a reduction in thickness will also lead to a reduction in the multiple scattering effect.

In general, the crystal is suitable for detection of different types of particle flows b(t), ranging from medical applications (e.g., Flash therapy control, for measuring the administered dose of ionizing radiation) to cosmic-ray tracking applications (e.g., physics and space research programs).

Of course, all details may be substituted with other technically equivalent elements.

In conclusion, the materials employed, as well as the shapes and dimensions of the above-mentioned devices, apparatuses and terminals, may vary according to specific implementation requirements, without however departing from the protection scope of the following claims.

## Claims

1. Charged-particle detection and tracking device (1) comprising:
a particle sensor (10) adapted to detect charged particles, and
a charge preamplifier (203) adapted to receive an electrical signal generated by the particle sensor (10) and to generate a corresponding voltage output signal proportional to the charge released by the sensor,
wherein the particle sensor (10) is electrically connected to a bias terminal (Tb) via a first electrical contact (102, 103) and to an input terminal (IN) of the charge preamplifier (203) via a second electrical contact (103, 102),
**characterized in that**
the particle sensor (10) comprises at least one perovskite crystal (101) comprising halides, and
**in that**,
in use, a bias voltage (Vbias) is applied so that the particle sensor (10) is subject to a potential difference between the first electrical contact (102, 103) and the second electrical contact (103, 102) substantially comprised between 20 V and 130 V, preferably around 100 V.

2. Device (1) according to claim 1, wherein the crystal (101) of the sensor (10) is defined by the chemical formula:
ABX3,
where A is a cation chosen from: cesium (Cs⁺), formamidinium (HC(=NH₂)NH₂⁺) or methylammonium (CH₃NH₃⁺). B is a metal cation chosen from: lead ion Pb2+ or tin ion Sn2+. X is a halide chosen from: chloride ion Cl-, bromide ion Br-, or iodide ion I-.

3. Device (1) according to claim 2, wherein the crystal (101) of the sensor (10) has a parallelepiped shape having a pair of square main faces with sides comprised between 3 mm and 7 mm, preferably equal to about 5.4 mm.

4. Device (1) according to claim 3, wherein the crystal (101) of the sensor (10) comprises an edge, transverse to the main faces, having a length between 0.3 mm and 2.5 mm, preferably equal to approximately 1.8 mm.

5. Device (1) according to any one of the preceding claims, wherein the electrical contacts (102, 103) of the sensor (10) are made of indium-tin oxide (ITO) or gold (Au).

6. Device (1) according to claim 5, wherein a first electrical contact (102, 103) is made of indium-tin oxide (ITO) and a second electrical contact (103, 102) is made of gold (Au).

7. Device (1) according to any one of the preceding claims, wherein a first resistor (R1), a first capacitor (C1), a second resistor (R2), a third resistor (R3) and a second capacitor (C2) are connected in series, in this order, between a terminal (Tb), adapted to receive a bias voltage, and an input terminal (IN) of the charge preamplifier (203), the particle sensor (10) being connected to a reference terminal and to a terminal to which the first resistor (R1) and the first capacitor (C1) are connected.

8. Device (1) according to claim 7, wherein a pair of diodes (D1, D2) are connected in parallel to an intermediate terminal (Tm), to which the second resistor (R2) and the third resistor (R3) are connected, and to a reference terminal (GND), wherein the anode and cathode of the first diode (D1) are arranged opposite the anode and cathode of the second diode (D2).

9. Particle emitter apparatus (2) comprising a particle source (40), a control system (30), and the particle detection and tracking device (1) according to any one of the preceding claims, wherein, in use, the device (1) is crossed by at least part of a flow of particles emitted by the particle source (40) and supplies the control system (30) with an electrical signal indicative of the intensity of the flow of particles emitted by the particle source (40), the control system (30) regulating the flow of particles emitted by the particle source (40) based on the electrical signal provided by the device (1).

10. Apparatus (2) according to claim 9, wherein the sensor (10) of the device (1) is positioned between the particle source (30) and a target (B) of the particle beam emitted by the particle source (30), so as to be crossed by the particle beam.
